# EUROPÄISCHE PATENTSCHRIFT

(11) **EP 1 126 299 B1**
(45) Veröffentlichungstag und Bekanntmachung des Hinweises auf die Patenterteilung: **29.09.2010**
(21) Anmeldenummer: 00103018.8
(22) Anmeldetag: 15.02.2000
(51) Int. Cl.: G02B 23/12

(54) **Gerät mit Nachtsichtfähigkeit**
Device with night sight function
Dispositif à vision nocturne

(43) Veröffentlichungstag der Anmeldung: 22.08.2001
(73) Patentinhaber: Vectronix AG, 9435 Heerbrugg (CH)
(72) Erfinder: Zadravec, Dusan, 9445 Rebstein (CH)
(74) Vertreter: Kaminski, Susanne

(56) Entgegenhaltungen:
- EP-A- 0 278 929
- WO-A-99/05547
- US-A- 3 712 702
- US-A- 5 282 082
- US-A- 5 621 567
- US-A- 5 902 996

## Beschreibung

Die vorliegende Erfindung betrifft ein Gerät nach dem Oberbegriff des Anspruches 1 und insbesondere einen Laserentfernungsmesser dieser Art. Ein derartiger Laserentfernungsmesser, jedoch ohne Nachtsichtfähigkeit, ist beispielsweise unter den Bezeichnungen Leica GEOVID bzw. Leica VECTOR auf dem Markt.

Binokulare, für die Tageslichtanwendung ausgelegte Geräte, wie gegebenenfalls auch Laserentfernungsmesser, die auch die ein- oder zweiäugige Beobachtung des Nachtbildes ermöglichen, sind nach folgendem Prinzip ausgebildet. Für die Nachtanwendung wird wenigstens eines der beiden Okulare entfernt und jeweils durch ein optisches System ersetzt, das aus einem Objektiv, einem Restlichtverstärker und einem speziellen Okular besteht. Eine solche Lösung weist demgemäss Schwachpunkte auf: technisch gesehen, steht das Entfernen eines Okulars bei Militärgeräten im Widerspruch zur geforderten Gasdichtheit des Geräts, wodurch eine teure Lösung zur Erzielung dieser Gasdichtheit erforderlich wird. Taktisch gesehen, ist es überdies ungünstig, dass der Anwender einerseits den "Nachtsicht-Zusatz" mit sich tragen und andererseits das ersetzte Standard-Okular sorgfältig versorgen muss, was sowohl Gewichts- als auch Tragekomfortprobleme mit sich zieht, ganz abgesehen von der erhöhten Möglichkeit, dass optische Oberflächen dabei zerkratzt werden können.

Zusätzlich wird das Gerät mit dem Nachtsicht-Zusatz deutlich länger und als solches unhandlicher.

Die Druckschrift US 5,282,082 beschreibt ein Gerät mit Tag- und Nachtsichtfähigkeit, welches über mehrere optische Kanäle verfügt.

Die Druckschrift WO 99/05547 beschreibt ein Gerät mit Tag- und Nachtsichtfähigkeit und einem Laserentfemungsmesser.

Die Druckschrift US 5,621,567 beschreibt ein binokulares Gerät mit Tag- und Nachsichtfähigkeit mit einem einzigen optischen Kanal.

Die Druckschrift EP 0 278 929 A1 beschreibt ein Gerät mit Tag- und Nachtsichtfähigkeit unter Verwendung von Teilerspiegeln.

Die Druckschrift US 3,712,702 beschreibt ein Gerät mit Tag- und Nachtsichtfähigkeit, welches über schaltbare Spiegel verfügt.

Der Erfindung liegt demgegenüber die Aufgabe zugrunde, Nachtsichtfähigkeit für an sich für eine blosse Tageslichtanwendung ausgelegte Geräte, wie Teleskope oder Laserentfernungsmesser, bereitzustellen, ohne dass die oben genannten Nachteile auftreten.

Diese Aufgabe wird durch die Verwirklichung der Merkmale des Anspruches 1 gelöst. Vorteilhafte bzw. alternative Ausführungsformen werden durch die Merkmale der abhängigen Ansprüche beschrieben.

Da erfindungsgemäss der Restlichtverstärker permanent eingebaut wird und seine wahlweise Einschaltung die Durchführung von Funktionen, wie insbesondere der Distanzmessfunktion, auch unter Nachtbedingungen ermöglicht, ohne dass optische Bestandteile, wie das Okular, zu entfernen sind, ist das Problem möglicher Gasundichtigkeit behoben. Der Anwender braucht nicht länger separate (und somit verlierbare) Teile mit sich zu tragen, wodurch sowohl das Gesamtgewicht als auch der Tragekomfort deutlich verbessert werden. Darüber hinaus bleiben auf Grund der vorliegenden Erfindung auch noch die Länge und der Bedienungskomfort des Gerätes mit Nachtsichtfähigkeit - im Vergleich zu reinen Tageslicht-Geräten - unverändert.

Wenn im Zusammenhang mit dieser Erfindung von einem ein- oder ausschaltbaren Teilerspiegel die Rede ist, so soll dies im weitesten Sinne derart verstanden werden, dass beispielsweise ein entsprechend elektrisch schaltbarer Flüssigkristall darunter fällt. Bevorzugt ist es allerdings, wenn wenigstens einer der Teilerspiegel ein um eine Schwenkachse aus einer, gegebenenfalls justierbaren, in eine andere, gegebenenfalls justierbare, Endlage kippbarer optischer Körper, insbesondere eine planparallele Platte, ist.

Wenn im Zusammenhang mit dieser Erfindung von einem Rezeptor die Rede ist, so wird dies im allgemeinen das menschliche Auge sein, könnte aber auch eine Videokamera oder ein anderer Sensor sein.

Ferner versteht es sich, dass die Erfindung grundsätzlich auch auf monokulare Geräte, wie Teleskope oder Laserentfernungsmesser, anwendbar ist; im allgemeinen wird allerdings - schon aus Komfort-Gründen zu bevorzugen sein, wenn der erste und der zweite optische Kanal Teil eines binokularen Systems sind.

Die Erfindung sei nun im folgenden beispielhaft an Hand von in der Zeichnung schematisch dargestellten Ausführungsformen beschrieben. Es zeigen:
- Fig. 1: eine schematische Darstellung einer erfindungsgemässen Anordnung eines Restlichtverstärkers und der zugehörigen Optik in einem binokula- ren Laserentfernungsmesser und
- Fig. 2: eine schematische Darstellung einer zweiten erfindungsgemässen An- ordnung eines Restlichtverstärkers und der zugehörigen Optik in einem binokularen Laserentfernungsmesser.

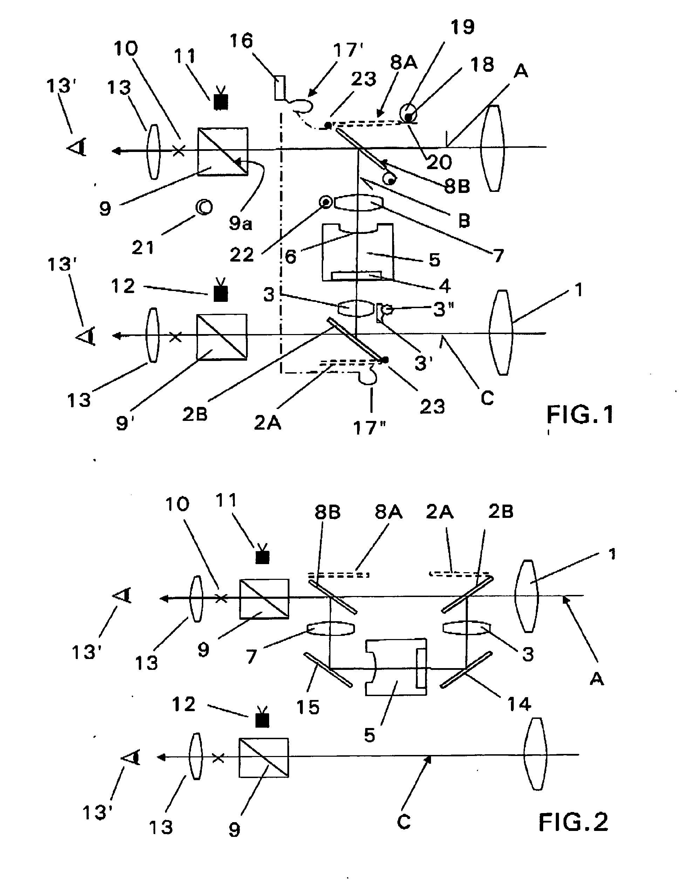

Die wesentlichen Bauteile der erfindungsgemässen Optik-Anordnung für einen Laserentfernungsmesser sind aus Fig. 1 zu entnehmen. Ein im Wellenlängenbereich von 400 bis 1000 nm, vorzugsweise 450 bis 950 nm, reflektierender Teilerspiegel 2 in Arbeitsstellung 2B lenkt das durch ein Objektiv 1 des Laserentfernungsmessers von einem zu beobachtenden bzw. zu vermessenden Objekt entlang einer Achse C kommende Licht in Richtung auf das Eintrittsfenster 4 eines Restlichtverstärkers 5 entlang einer optischen Achse B ab. Für die Fokussierung des Lichts auf das Eintrittsfenster 4 ist dem Objektiv 1 eine Fokussiereinrichtung mit einer Linse 3 mit für die Fokussierung bekannten mechanischen Elementen, wie z.B. eine Zahnstange 3' und ein Ritzel 3", zugeordnet. Der Restlichtverstärker entspricht in seiner Ausbildung vorteilhaft einer unter der Bezeichnung Gen II, Gen III oder Gen IV am Markte befindlichen Generation. Im Restlichtverstärker 5 wird das Bild des Objekts elektronisch verstärkt und wird in der Regel als helles, phosphor-grünes Bild an dessen Austrittsfenster 6 erscheinen. Dieses grüne Bild wird über ein optisches System 7, im vorliegenden Falle ein Linsensystem, zuerst auf einen zweiten Teilerspiegel 8 in Arbeitsstellung 8B geführt, der das grüne Licht des Austrittsfensters 6 in Richtung auf einen Strahlteiler 9 mit einer Teilerfläche 9a ableitet. Das grüne Licht wird schliesslich in einer Bildebene 10 fokussiert. Dadurch wird der Anwender in die Lage versetzt, durch ein Okular 13 des Laserentfernungsmessers ein elektronisch verstärktes grünes Bild des Objektes einäugig zu betrachten.

Es wäre aber auch möglich, beispielsweise in der Bildebene 10, eine weitere Teilerfläche mit zur Teilerfläche 9a senkrechter Ausrichtung vorzusehen, die das Bild in Richtung auf eine zur Achse A parallele optische Achse C für das zweite Auge umlenkt, wo das Bild in für Einspiegelungen bekannter Weise auch dem zweiten Auge zugeführt wird.

Die beiden Teilerspiegel 2 bzw. 8 - deren ausgeschaltete Lage, die sogenannte Ruhestellung (der Tageslichtanwendung des Laserentfernungsmessers entsprechend) mit 2A bzw. 8A bezeichnet ist - haben eine spezielle Beschichtung. Der zweite Teilerspiegel 8 reflektiert Licht in einem dem vom Austrittsfenster 6 kommenden Licht entsprechenden Wellenlängenbereich, also etwa 400 bis 1000 nm, vorzugsweise 450 bis 950 nm. Bei der gängigen Ausführung der Austrittsfenster 6 der Restlichtverstärker 5 wird das Reflexionsmaximum im Bereich von phosphorgrün sein, doch ist dies nicht erfindungswesentlich, da bei künftigen Restlichtverstärkem gegebenenfalls ein anderer Wellenlängenbereich abgestrahlt werden könnte. Jedenfalls sind aber im vorliegenden Ausführungsbeispiel gleichzeitig beide Teilerspiegel 2 und 8 für die jeweils angewandte Wellenlänge eines Lasers 11, d.h. zwischen etwa 1400 und 1800 nm, im dargestellten Anwendungsfall,vorzugsweise um 1550 nm, im wesentlichen vötlig durchlässig.

Die beiden Teilerspiegel 2 und 8 sind im vorliegenden Ausführungsbeispiel die einzigen Teile, die für die Umschaltung von einer Tag- auf eine Nachtfunktion (und umgekehrt) des Gerätes mechanisch bewegt werden müssen. Durch Betätigung eines Knopfes 16, der aussen am (nicht dargestellten) Gehäuse des Laserentfernungsmessers betätigbar ist, werden, wie strich-punktiert angedeutet, beide Teilerspiegel 2, 8 bewegt. Dies kann beispielsweise mit Hilfe von Kippfedem 17' bzw. 17" erfolgen, die in der dargestellten Form als Omega-Feder ausgebildet sein können. In jedem Falle kippen dann die beiden Teilerspiegel 2, 8 gleichzeitig jeweils um eine Schwenkachse 23 von einer Endlage, z.B. aus der Ruhelage 2A, 8A, in die andere Endlage, z.B. die Arbeitsstellung 2B, 8B. Die Endlagen können durch Anschläge bestimmt werden, die vorzugsweise wenigstens für die in den Strahlengang eingeschaltete Lage justierbar sind. Im vorliegenden Fall sind zur Justierung jeweils um eine Achse 18 drehbare Nocken 19 vorgesehen und für den Spiegel 8 gezeigt, wobei die Justiereinrichtung für den ersten Teilerspiegel 2 gleich oder auch in einer anderen bekannten Weise ausgebildet sein kann. Die Nocken 19 wirken dabei auf Endfortsätze 20 der Teilerspiegel 2 bzw. 8.

Die Optik nach Fig. 1 besitzt, wie an Hand der verschiedenen Achsen A-C oben bereits erwähnt, mehrere optische Kanäle. Aus dem Kanal mit der Achse A wird vom Laser 11 ausgesandtes und vom Objekt reflektiertes Laserlicht mittels eines zweiten Strahlenteilers 9' auf einen Empfänger 12 ausgespiegelt, der in herkömmlicher Weise ausgebildet sein kann und dessen Signal in für Laserentfernungsmesser bekannter Weise ausgewertet wird. Die Tatsache, dass sich also der Laser 11 und der Empfänger 12 jeweils in einem gesonderten Kanal befinden, könnte zu einer Dejustierung des Laserentfernungsmessers führen. Dank der optischen Anordnung nach der Erfindung werden aber beide Teilerspiegel stets parallel zueinander bzw. gleichzeitig eingeschaltet. Dies wird besonders leicht durch die gemeinsame Betätigungseinrichtung, hier in Form des Knopfes 16 ermöglicht. Das bedeutet aber, dass der Versatz in beiden optischen Kanälen A, C in dieselbe Richtung stattfindet und somit der Laserentfernungsmesser auch in seiner Nachtfunktion voll justiert bleibt. Dazu ist die Justiereinrichtung 18-20 wieder von besonderem Nutzen.

Das optische System 7 kann je nach der geforderten Vergrösserung des Gerätes für Nachtanwendung mit den verschiedensten Brennweiten bzw. Abbildungsmassstäben entwickelt werden. Es sei hier hervorgehoben, dass dieses optische System in Fig. 1 nur schematisch durch eine einzige Linse 7 dargestellt ist, dass es sich aber um eine Zoom-Baugruppe handeln kann, die den Abbildungsmassstab in der Bildebene 10 zu verändern vermag. Zu diesem Zwecke ist vorteilhafterweise dem optischen System 7 eine Einstelleinrichtung, z.B. mit einem Drehknopf 21 und einem Ritzel 22, zum Abbilden des am Austrittsfenster 6 verfügbaren, elektronisch verstärkten Bildes des Objekts in der Bildebene 10 mit einem veränderbaren Abbildungsmassstab zugeordnet. Die Einstelleinrichtung 21, 22 kann auf jede für Zoom-Einrichtungen bekannte Art ausgebildet sein.

Das von der Linse 3 gebildete Fokussiersystem (das ebenfalls gewünschtenfalls aus mehreren Linsen bestehen kann) ist jedenfalls so ausgelegt, dass eine Fokussierung des vom Objektiv 1 entworfenen Objektbildes auf das Eintrittsfenster 4 des Restlichtverstärkers 5 erfolgt bzw. mit Hilfe der Fokus-Einstelleinrichtung 3', 3" erfolgen kann. Dabei ist natürlich zu berücksichtigen, dass das Objektiv 1 eine vorbestimmte Schärfentiefe, und damit eine vorbestimmte Toleranz gegenüber einer an sich ungenauen Fokussierung, haben wird.

Das wesentliche Merkmal der in Fig. 2 gezeigten Ausführungsform ist, dass Empfang und Beobachtung des Restlichtes in ein und demselben optischen Kanal stattfindet. Dies steht im Gegensatz zu Fig. 1, wo das Restlicht des Objektes in einem optischen Kanal, nämlich dem mit der Achse C, empfangen und - nach elektronischer Verstärkung und Beschränkung auf einen vom Austrittsfenster 6 abgegebenen Wellenlängenbereich (insbesondere grün) - im anderen Kanal mit der Achse A beobachtet wird.

Dazu werden zwei zusätzliche Lichtablenkungen derart herangezogen, dass die beiden Teilerspiegel 2 und 8, mindestens im für Nachtsicht eingeschalteten Zustand, parallel zueinander im selben optischen Kanal A liegen, wobei zusätzlich zwei reflektive Elemente, insbesondere voll reflektierende, Spiegel 14, 15, zum Falten der optischen Achse vorgesehen sind. Die beiden Spiegel 14, 15 sind zweckmässig hochreflektierend und brauchen nicht bewegt zu werden, d.h. sie sind stabil positioniert. Natürlich verursacht auch in diesem Falle jeder der eingeschalteten Teilerspiegel 2, 8 ein Versetzen der optischen Achse, mindestens solange er, wie dargestellt, in Form einer planparallelen Platte ausgebildet ist. Das Versetzen erfolgt aber in Gegenrichtungen, was bei gleicher Ausbildung der Platten zu einer Kompensation führt, so dass auch hier der Laserentfernungsmesser voll justiert bleibt.

Es versteht sich, dass die Verwendung planparalleler Platten für die Strahlenteilung nicht die einzige Möglichkeit ist, sondern dass, etwa zu Justierzwecken auch eine Fläche mindestens eines Keiles mit einer teildurchlässigen Schicht in ähnlicher Weise bedeckt sein kann, wie es - zu anderen Zwecken - bei den Strahlenteilern 9 bzw. 9' der Fall ist.

Die Vorteile der Erfindung liegen auf der Hand:
- Die sehr kompakte, den Restlichtverstärker 5 integrierende Ausführung ermöglicht eine kleinstmögliche Anzahl von für die Nachtanwendung zuschaltbaren optischen Elementen (Teilerspiegel 2, 8). Dadurch wird sowohl das Gewicht reduziert, als auch die Temperatur- und Schockstabilität des Laserentfernungsmessers insgesamt, und besonders unter Nachtbedingungen, verbessert;
- die Integrierung des Restlichtverstärkers 5 ändert die Aussenform des Laserentfernungsmessers nicht, was zu einer - gegenüber der Anwendung bei Tageslicht - ungeänderten Art der Bedienung führt;
- die Integrierung des Restlichtverstärkers 5 vermeidet das Mittragen gesonderter, und daher verlierbarer, Teile und vereinfacht auch die Gasabdichtung im Bereiche des Okulars 13.

## Patentansprüche

1. Gerät mit Tag- und Nachtsichtfähigkeit
- mit zwei optischen, Tagbeobachtung ermöglichenden Kanälen (A, C), welche Kanäle als Sende- bzw. Empfangskanal für einen Laserentfernungsmesser (11,12) dienen, der Laserlicht einer ersten Wellenlänge aussendet,
- wobei von den zwei Kanälen ein erster Kanal (A) auch für Nachtbeobachtung vorgesehen ist, und
- wobei das von einem Objekt ausgehende Restlicht über einen ersten Spiegel (2) und ein erstes optisches System (3) auf ein Eintrittsfenster (4) eines Restlichtverstärkers (5) fokussiert wird, welcher erste Spiegel (2) als Teilerspiegel ausgebildet ist, der das Restlicht reflektiert, für die erste Wellenlänge jedoch im wesentlichen völlig durchlässig ist;
- wobei das an einem Austrittsfenster (6) des Restlichtverstärkers (5) verfügbare, in einem zweiten, vorgegebenen Wellenlängenbereich dargestellte und elektronisch verstärkte Bild des Objekts mittels eines zweiten Spiegels (8) zu einem Rezeptor (13') am ersten optischen Kanal (A) projiziert wird, welcher zweite Spiegel (8) als Teilerspiegel ausgebildet ist, der das Licht im zweiten Wellenlängenbereich reflektiert, jedoch für die erste Wellenlänge im wesentlichen völlig durchlässig ist; und
- wobei erster und zweiter Spiegel (2, 8)als ein- bzw, ausschaltbare Teilerspiegel ausgebildet sind, solcherart Nacht- bzw. Tagsichteinsatz des Gerätes ermöglichend.

2. Gerät nach Anspruch 1, **dadurch gekennzeichnet, dass** ein zweites optisches System (7) vorgesehen ist, welches das am Austrittsfenster (6) verfügbare, elektronisch verstärkte Bild des Objekts in einer zugehörigen Bildebene (10) abbildet, wobei dem weiteren optischen System eine Einstelleinrichtung (21, 22) zugeordnet ist zum Abbilden des Objektbildes mit veränderbarem Abbildungsmassstab.

3. Gerät nach Anspruch 1 oder 2, **dadurch gekennzeichnet, dass** ein weiterer optischer Kanal (B) vorgesehen ist, in dem das erste optische System (3), der Restlichtverstärker (5) und gegebenenfalls das zweite optische System (7) angeordnet sind, welcher weiterer optische Kanal (B) zwischen den beiden Teilerspiegeln (2, 8) angeordnet ist.

4. Gerät nach Anspruch 3, **dadurch gekennzeichnet, dass** die beiden Teilerspiegel (2, 8) mindestens im eingeschalteten Zustand im ersten optischen Kanal (A) liegen, und wobei zusätzlich zwei, insbesondere voll reflektierende, Spiegel (14, 15) zum Falten des weiteren optischen Kanals (B) vorgesehen sind.

5. Gerät nach einem der vorhergehenden Ansprüche, **dadurch gekennzeichnet, dass** dem das von dem Objekt ausgehende Licht auf das Eintrittsfenster (4) des Restlichtverstärkers (5) werfenden optischen System (3) eine Fokus-Einstelleinrichtung (3', 3") zugeordnet ist.

6. Gerät nach einem der vorhergehenden Ansprüche, **dadurch gekennzeichnet, dass** wenigstens einer der Teilerspiegel (2, 8) ein optischer Körper, wie ein Keil, ein Glaswürfel, eine planparallele Platte od.dgl., mit einer Teilerschicht auf einer seiner Flächen ist.

7. Gerät nach einem der vorhergehenden Ansprüche, **dadurch gekennzeichnet, dass** wenigstens einer der Teilerspiegel (2, 8) um eine Schwenkachse (23) aus einer, gegebenenfalls mittels einer Justiereinrichtung (18-20) justierbaren, Lage (z.B. 2A, 8A) in eine andere, gegebenenfalls mittels einer Justiereinrichtung (18-20) justierbare, Endlage (z.B. 2B, 8B) kippbarer optischer Körper, insbesondere eine planparallele Platte, ist.

8. Gerät nach einem der Ansprüche 2 bis 7, **dadurch gekennzeichnet, dass** für die Betätigung der Teilerspiegel (2, 8) eine gemeinsame Betätigungseinrichtung (16) vorgesehen ist.

9. Gerät nach einem der vorhergehenden Ansprüche, **dadurch gekennzeichnet, dass** vor dem Rezeptor (13'), ein Okular (13) vorgesehen ist.

## Claims

1. Device with day and night vision capability
- comprising two optical channels (A, C) permitting day observation, which channels serve as a transmitting or a receiving channel for a laser rangefinder (11, 12) which emits laser light of a first wavelength,
- a first channel (A) of the two channels also being provided for night observation, and
- the low light level emitted by an object being focused via a first mirror (2) and a first optical system (3) onto an entry window (4) of a low-light-level amplifier (5), which first mirror (2) is in the form of a splitter mirror which reflects the low light level but is substantially completely transparent for the first wavelength;
- that image of the object which is available at an exit window (6) of the low-light-level amplifier (5), represented in a second, specified wavelength range and electronically amplified being projected by means of a second mirror (8) to a receiver (13') at the first optical channel (A), which second mirror (8) is in the form of a splitter mirror which reflects the light in the second wavelength range but is substantially completely transparent for the first wavelength range; and
- first and second mirrors (2, 8) being in the form of splitter mirrors which can be switched on or off, thus permitting light or day vision use of the device.

2. Device according to Claim 1, **characterized in that** a second optical system (7) is provided which focuses that image of the object which is available at the exit window (6) and is electronically amplified in an associated image plane (10), a setting device (21, 22) being coordinated with the further optical system in order to focus the object image with variable imaging scale.

3. Device according to Claim 1 or 2, **characterized in that** a further optical channel (B) is provided, in which the first optical system (3), the low-light-level amplifier (5) and optionally the second optical system (7) are arranged, which further optical channel (B) is arranged between the two splitter mirrors (2, 8).

4. Device according to Claim 3, **characterized in that** the two splitter mirrors (2, 8), at least when switched on, lie in the first optical channel (A), two, in particular completely reflective, mirrors (14, 15) additionally being provided for folding the further optical channel (B).

5. Device according to any of the preceding claims, **characterized in that** a focus setting device (3', 3") is coordinated with the optical system (3) focusing the light emanating from the object onto the entry window (4) of the low-light-level amplifier (5).

6. Device according to any of the preceding claims, **characterized in that** at least one of the splitter mirrors (2, 8) is an optical body, such as a wedge, a glass cube, a plane-parallel plate or the like, having a splitter layer on one of its surfaces.

7. Device according to any of the preceding claims, **characterized in that** at least one of the splitter mirrors (2, 8) has an optical body tiltable about a pivot axis (23) from one position (e.g. 2A, 8A), optionally adjustable by means of an adjusting device (18-20), to another end position (e.g. 2B, 8B), optionally adjustable by means of an adjusting device (18-20), in particular is a plane-parallel plate.

8. Device according to any of claims 2 to 7, **characterized in that** a common actuating device (16) is provided for actuating the splitter mirrors (2, 8).

9. Device according to any of the preceding claims, **characterized in that** an eyepiece (13) is provided before the receiver (13').

## Revendications

1. Dispositif à fonction de vision diurne et nocturne,
- avec deux canaux optiques (A, C), permettant une observation diurne, lesdits canaux servant de canal émetteur ou récepteur pour un télémètre laser (11, 12), émettant de la lumière laser d'une première longueur d'onde,
- sachant que, des deux canaux, un premier canal (A) est également prévu pour l'observation nocturne, et
- la lumière résiduelle, partant d'un objet, étant focalisée, par l'intermédiaire d'un premier miroir (2) et d'un premier système optique (3), sur une fenêtre d'entrée (4) d'un amplificateur de lumière résiduelle (5), ledit premier miroir (2) étant réalisé sous la forme d'un miroir diviseur, réfléchissant la lumière résiduelle, cependant pratiquement totalement transparent pour la première longueur d'onde,
- l'image, disponible sur une fenêtre de sortie (6) de l'amplificateur de lumière résiduelle (5), représentée dans une deuxième plage de longueurs d'onde, prédéterminée, et amplifiée électroniquement, de l'objet étant projetée, au moyen d'un deuxième miroir (8) sur un récepteur (13') sur le premier canal optique (A), ledit deuxième miroir (8) étant réalisé sous la forme d'un miroir diviseur, réfléchissant la lumière dans la deuxième plage de longueurs d'onde, mais cependant pratiquement totalement transparent pour la première longueur d'onde ; et
- les premier et deuxième miroirs (2, 8) étant réalisés sous forme d'un miroir diviseur susceptible d'être mis en circuit et hors circuit, en permettant de cette manière une utilisation nocturne ou diurne du dispositif.

2. Dispositif selon la revendication 1, **caractérisé en ce qu'**est prévu un deuxième système optique (7), imageant dans un plan image (10) afférent l'image, disponible sur la fenêtre de sortie (6), amplifiée électroniquement, de l'objet, un dispositif de réglage (21, 22) étant associé à l'autre système optique, pour représenter l'image d'objet à une échelle d'imagerie modifiable.

3. Dispositif selon la revendication 1 ou 2, **caractérisé en ce qu'**est prévu un autre canal optique (B), dans lequel le premier système optique (3), l'amplificateur de lumière résiduelle (5) et, le cas échéant, le deuxième système optique (7) sont disposés, ledit autre canal optique (B) étant disposé entre les deux miroirs diviseurs (2, 8).

4. Dispositif selon la revendication 3, **caractérisé en ce que** les deux miroirs diviseurs (2, 8), au moins à l'état mis en circuit, sont situés dans le premier canal optique (A), et où, en plus, deux miroirs (14, 15), en particulier à réflexion totale, sont prévus pour dévier l'autre canal optique (B).

5. Dispositif selon l'une des revendications précédentes, **caractérisé en ce qu'**un dispositif de focalisation et de réglage (3', 3") est associé au système optique (3) projetant la lumière, partant de l'objet, sur la fenêtre d'entrée (4) de l'amplificateur de lumière résiduelle (5).

6. Dispositif selon l'une des revendications précédentes, **caractérisé en ce qu'**au moins l'un des miroirs diviseurs (2, 8) est un corps optique, tel qu'un coin, un cube en verre, une plaque plan-parallèle ou analogue, avec une couche formant diviseur sur l'une de ses faces.

7. Dispositif selon l'une des revendications précédentes, **caractérisé en ce qu'**au moins l'un des miroirs diviseurs (2, 8) est un corps optique, en particulier une plaque plan-parallèle, susceptible de basculer autour d'un axe de pivotement (23), d'une position (par exemple 2A, 8A), le cas échéant susceptible d'être ajustée au moyen d'un dispositif d'ajustement (18-20), en une autre position finale (par exemple 2B, 8B), le cas échéant susceptible d'être ajustée au moyen d'un dispositif d'ajustement (18-20).

8. Dispositif selon l'une des revendications 2 à 7, **caractérisé en ce qu'**un dispositif d'actionnement (16) commun est prévu pour l'actionnement des miroirs diviseurs (2, 8).

9. Dispositif selon l'une des revendications précédentes, **caractérisé en ce qu'**un oculaire (113) est prévu devant le récepteur (13').
